# EUROPÄISCHE PATENTSCHRIFT

(11) **EP 2 657 881 B1**
(45) Veröffentlichungstag und Bekanntmachung des Hinweises auf die Patenterteilung: **11.06.2014**
(21) Anmeldenummer: 12165915.5
(22) Anmeldetag: 27.04.2012
(51) Int. Cl.: G06K 7/10

(54) **Beleuchtungsvorrichtung und Verfahren zur Erzeugung eines Beleuchtungsbereichs**
Illumination device and method for creating an illumination area
Dispositif d'éclairage et procédé destinés à la production d'une zone d'éclairage

(43) Veröffentlichungstag der Anmeldung: 30.10.2013
(73) Patentinhaber: SICK AG, 79183 Waldkirch (DE)
(72) Erfinder: Nübling, Ralf Ulrich, 79211 Denzlingen (DE)
(74) Vertreter: Hehl, Ulrich

(56) Entgegenhaltungen:
- EP-A1- 0 757 270
- EP-A1- 2 136 248
- US-A1- 2004 035 931

## Beschreibung

Die Erfindung betrifft eine Beleuchtungsvorrichtung und ein Verfahren zur Erzeugung eines Beleuchtungsbereichs für einen kamerabasierten Codeleser nach dem Oberbegriff von Anspruch 1 beziehungsweise 14.

Für das Lesen optischer Codes, wie Barcodes oder Matrixcodes, werden zunehmend kamerabasierte Codeleser eingesetzt. Dabei wird ein Bild des Codes aufgenommen und anschließend die Codeinformation mit digitaler Bildverarbeitung ausgelesen. In industriellen Anwendungen ist der Codeleser dabei häufig stationär an einem Förderband montiert, auf dem codetragende Objekte an dem Codeleser vorbei gefördert werden. Bekannt sind andererseits aber auch Handgeräte, die über die zu lesenden Codes geführt werden.

Damit das Lesefeld ausreichend beleuchtet ist, verfügen viele Kameras über eine eigene Beleuchtung. Diese Beleuchtung kann in kompakten Kamerasystemen integriert und beispielsweise als Ringlicht um die Empfangsoptik ausgebildet sein. Eine fixe Beleuchtung hat bei einem großen Abstandsbereich zur Folge, dass die Beleuchtung meist nur in einem Abstand ideal ist, wobei meist eine homogene Energieverteilung gewünscht wird. In allen anderen Bereichen fehlt es zumindest an einer Anpassung hinsichtlich beispielsweise Feldgröße oder Homogenität, oder die Beleuchtung ist sogar gänzlich unbrauchbar.

Eine herkömmliche Lösung besteht darin, einzelne Baugruppen wie die Linsen einer Sendeoptik der Beleuchtung längs der optischen Achse verschieblich auszubilden. Solche Verstellmechanismen sind aber häufig aufwändig, anfällig und nicht automatisierbar oder zu langsam.

Aus der EP 2 136 248 A1 ist eine Bildaufnahmevorrichtung mit einer anpassbaren Beleuchtung aus mehreren Lichtquellen bekannt. Dabei bewirkt eine Verstellung der Fokussierung der Empfangsoptik zugleich eine Anpassung der Beleuchtung. Allerdings muss eine recht große Masse bewegt werden, um die Sendeoptik auf der optischen Achse zu verschieben. Die Beleuchtungsanpassung wird dadurch aufwändig und verhältnismäßig träge.

In der noch unveröffentlichten europäischen Patentanmeldung mit dem Aktenzeichen EP 11162584.4 wird eine Ringbeleuchtung für einen Codeleser offenbart, bei der mehrere gleichartige Linsen um einen Umfang eines Gehäuseaufsatzes verteilt angeordnet sind. Durch Verdrehen des Gehäuseaufsatzes in einem Gewinde wird der Abstand zu den Lichtquellen der Beleuchtung variiert. Dabei wechseln die Linsen ihre Zuordnung zu den jeweiligen Lichtquellen, effektiv wird dabei jeder Lichtquelle eine andere, aber gleichartige Linse mit einem neuen Abstand zugeordnet, so dass die Beleuchtung entsprechend fokussiert wird. Auch hierbei muss der gesamte Gehäuseaufsatz und damit eine große Masse bewegt werden.

Aus der EP 0 757 270 A1 ist eine Autofokusvorrichtung bekannt, bei der ein Linsenträger beweglich in zwei ringförmigen Halterungen gelagert ist. Bei einer Fokusverstellung wird der Linsenträger längs der optischen Achse der Linse verschoben, wodurch eine Zunge der Halterungen, die einerseits an dem Linsenträger und andererseits an dem Gehäuse festgelegt ist, wie eine Blattfeder gespannt wird. Bei den vorgesehenen geringen Verschiebungen während der Fokusverstellungen kann durch diese Art der Lagerung eine lineare Bewegung in dem Sinne erreicht werden, dass die Linse nicht zugleich verkippt wird.

Die US 2004/0035931 A1 offenbar eine integrierte optische Vorrichtung mit einer optischen Detektionseinheit, in der ein Lichtsender mit einer Projektionslinse und ein Lichtempfänger mit einer Empfangslinse vorgesehen ist. Die Linsen können zur Fokusverstellung längs der ihrer optischen Achsen verschoben werden. Die optische Detektionseinheit ist mit Hilfe einer flexiblen Platte an einem feststehenden Teil befestigt und kann so als Ganzes periodisch verschwenkt werden, um einen Barcode abzutasten.

Es ist daher Aufgabe der Erfindung, für eine gattungsgemäße Beleuchtung eine einfache Nachführung des Beleuchtungsfeldes zu ermöglichen.

Diese Aufgabe wird durch eine Beleuchtungsvorrichtung und ein Verfahren zur Erzeugung eines Beleuchtungsbereichs für einen kamerabasierten Codeleser nach Anspruch 1 beziehungsweise 14 gelöst. Dabei geht die Lösung von dem Grundgedanken aus, die relative Lage zwischen einem Optikhalter der Sendeoptik und dem Lichtsender zur Anpassung der Beleuchtung mit Hilfe einer Einstelleinrichtung zu verändern. Um aber dabei mit kleinen bewegten Massen und kleinen Einstelländerungen auszukommen, wird der Optikhalter an mindestens einem Fixpunkt festgehalten. Dieser Fixpunkt ist beispielsweise eine Verbindung des Optikhalters mit einem Gehäuseteil, in dem sich der Lichtsender befindet. Dadurch entsteht eine zwangsgeführte Positionierung des Optikhalters, der an dem Fixpunkt unabhängig von der Betätigung der Einstelleinrichtung seine Lage beibehält.

Die Erfindung hat den Vorteil, dass auch über große Abstandsbereiche eine gewünschte, beispielweise homogene Lichtverteilung gewährleistet ist. So kann die Beleuchtung auf ein zu erfassendes Objekt beziehungsweise eine Empfangseinheit einer Kamera nachgeführt werden. Aufgrund der einfachen Bewegung bei geringer Masse kann eine Verstellung sehr schnell, sogar im Millisekundenbereich, und unter geringer Krafteinwirkung einer dementsprechend einfach ausführbaren Einstelleinrichtung erfolgen. Dabei bleibt die Beleuchtungsvorrichtung kostengünstig und einfach in hoher Stückzahl reproduzierbar. Eine Justage ist nicht erforderlich. Es sind beliebige Beleuchtungsszenarien möglich, in denen ein großer Schärfentiefebereich mit einer Beleuchtung abgedeckt werden kann. Da nur der Optikhalter bewegt wird, kann eine Elektronikkarte mit dem Lichtsender fix bleiben, so dass eine ausgezeichnete Wärmeanbindung der Elektronikkarte möglich wird und bewegte Kabel vermieden werden.

Die Einstelleinrichtung ist dafür ausgebildet, den Optikhalter längs der optischen Achse des Lichtsenders zu bewegen, wobei die Sendeoptik bei einer solchen Bewegung durch das Festlegen an dem Fixpunkt zugleich quer zu der optischen Achse beweglich und/oder verkippbar ist. Obwohl die Einstelleinrichtung nur eine einfache eindimensionale Bewegung erzeugt, bewirkt dies wegen des Fixpunktes eine Verstellung der Sendeoptik in zwei Koordinaten. Zu der Positionsänderung kann noch eine Verkippung hinzutreten, die durch den Optikhalter und dessen Festlegung wohldefiniert ist und somit zur Anpassung der Beleuchtung beiträgt oder sie sogar maßgeblich beeinflusst. Es ist auch denkbar, dass die Einstellvorrichtung mit einer Querkomponente zur optischen Achse oder sogar senkrecht dazu eingreift. Auch dann sorgt der Fixpunkt dafür, dass sich die Sendeoptik sowohl längs der optischen Achse als auch quer dazu bewegt.

Die Sendeoptik ist bevorzugt mit dem Optikhalter einstückig ausgebildet. Dadurch sind keine weiteren Montage- oder Justageschritte erforderlich. Eine besonders einfache bevorzugte Herstellungsweise besteht darin, dass Linsen oder andere optische Elemente, welche die Sendeoptik bilden, in den Optikhalter eingespritzt sind.

Der Optikhalter ist bevorzugt als Kunststoff-Spritzgussteil oder als Blech, insbesondere Linsenblech ausgebildet. So ist der Optikhalter leicht in der gewünschten Geometrie herstellbar. Er bietet die nötige Flexibilität an dem Fixpunkt bei Verstellungen und lässt die einstückige Herstellung mit der Sendeoptik zu, insbesondere durch Einspritzen von Linsen. Vorzugsweise sind an den Lager- beziehungsweise Biegepunkten Verjüngungen vorgesehen.

Die Beleuchtungsvorrichtung umfasst bevorzugt eine Vielzahl von Lichtsendern, wobei die Sendeoptik eine Vielzahl den Lichtsendern zugeordnete, insbesondere untereinander gleichartiger Linsen aufweist. Dabei gehört also beispielsweise zu jedem Lichtsender eine Linse oder eine Anordnung mehrerer Linsen.

Die Beleuchtungsvorrichtung ist bevorzugt als Ringbeleuchtung ausgebildet, bei der die Lichtsender ringförmig über deren Umfang verteilt sind. Noch bevorzugter ist die Verteilung gleichmäßig. Das erleichtert die Herstellung und eine homogene Ausleuchtung des Lesefeldes des Codelesers.

Vorzugsweise ist der Optikhalter an einem Außenumfangsbereich festgelegt und in einem Innenbereich durch die Einstelleinrichtung beweglich oder umgekehrt. Somit verstellt die Einstelleinrichtung den Innenbereich des Optikhalters konzentrisch und unter dessen elastischer Verformung gegen die fixe Lagerung am Außenbereich oder umgekehrt.

In einer bevorzugten Weiterbildung ist der Optikhalter sternförmig ausgebildet und weist jeweils in den Strahlen des Sterns mindestens ein Optikelement der Sendeoptik auf. Die Strahlen verbiegen sich bei Betätigung des Optikhalters, um die Optikelemente oder Linsen in die gewünschte Position und Orientierung zu bringen. Der sternförmige Optikhalter ist insbesondere als sternförmiges Linsenblech ausgebildet.

Der Optikhalter weist bevorzugt mindestens einen flexiblen Teilbereich auf, der durch Betätigung der Einstelleinrichtung elastisch verformbar ist. Der flexible Teilbereich ist also so etwas wie eine Sollbiegestelle, um unkontrollierte Verformung des Optikhalters zu vermeiden und die Sendeoptik bei Betätigung der Einstelleinrichtung zuverlässig in einen gewünschten Zustand zu bringen.

Vorzugsweise ist jeweils ein flexibler Teilbereich zentral oder seitlich versetzt in den Strahlen des Sterns vorgesehen. Damit wird der sternförmige Optikhalter bei Betätigung der Einstelleinrichtung auf eine sehr kontrollierte Weise verformt, so dass eine zuverlässige Einstellung der Sendeoptik und damit der Beleuchtung ermöglicht ist.

Die Beleuchtungsvorrichtung weist bevorzugt mindestens zwei Optikhalter mit jeweils einer Sendeoptik auf. Damit können auch aufwändigere, mehrteilige Optiken für eine Beleuchtungsanpassung genutzt werden. Dabei sind sämtliche Mischformen der Einstellbarkeit der Optikhalter denkbar, also beispielsweise dass zwei Optikhalter mit jeweils einer eigenen Einstelleinrichtung vorgesehen sind, dass eine gemeinsame Einstelleinrichtung auf beide Optikhalter einwirkt oder dass ein Optikhalter starr ist und nur der andere von einer Einstelleinrichtung variiert wird. Auch ist möglich, einen zusätzlichen Optikhalter vorzusehen, der nicht an einem Fixpunkt festgelegt ist, beispielsweise um damit zunächst einen groben Arbeitsbereich der Beleuchtung einzustellen, innerhalb dessen dann der andere, an einem Fixpunkt festgelegte Optikhalter für schnelle Anpassungen sorgt.

Die Einstelleinrichtung weist bevorzugt eine manuelle Betätigung oder einen elektronisch ansteuerbaren Aktor auf. Ein Beispiel für eine manuelle Betätigung ist ein Drehring mit einem schraubenförmigen Führungsschlitz für den Optikhalter. Automatische Aktoren umfassen beispielsweise Elektromotoren, Tauchspulen oder Piezoelemente.

In bevorzugter Weiterbildung der Erfindung umfasst ein kamerabasierter Codeleser eine erfindungsgemäße Beleuchtungsvorrichtung und weist zudem einen Bildsensor und eine Auswertungseinheit auf, die dafür ausgebildet ist, aus Bilddaten des Bildsensors eine Codeinformation eines aufgenommenen Codes auszulesen und auszugeben. Selbst unter ungünstigen Umgebungsbedingungen sind so die Codes gleichmäßig und ausreichend ausgeleuchtet und können daher mit besonders geringen Lesefehlern erfasst werden.

Die Einstelleinrichtung weist bevorzugt eine Kopplung an eine Fokussiereinrichtung für eine Empfangsoptik des Bildsensors auf. Dabei wird die empfangsseitige Objektivbewegung für die Fokusanpassung des Bildssensors als Aktor für die Beleuchtungsanpassung verwendet. Man kann so einen Aktor einsparen. Außerdem ist eine optimale Abstimmung zwischen dem Senderdesign und der Empfangsoptik möglich, so dass die Fokussierung des Bildsensors und die Beleuchtung weitgehend unabhängig vom einzustellenden Arbeitsabstand optimal zueinander passen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines kamerabasierten Codelesers, dessen Beleuchtung auf einen fernen Arbeitsabstand eingestellt ist;
- Fig. 2: eine Schnittdarstellung eines kamerabasierten Codelesers, dessen Beleuchtung auf einen nahen Arbeitsabstand eingestellt ist;
- Fig. 3: einen positionsabhängigen Intensitätsverlauf der Beleuchtung für die beiden Einstellungen gemäß Figur 1 und 2;
- Fig. 4a: eine Darstellung einer Beleuchtungsvorrichtung, von der zur Vereinfachung nur eine Linse und ein an einem Fixpunkt festgelegter Optikhalter schematisch gezeigt ist;
- Fig. 4b: eine Darstellung gemäß Figur 4a in einem verstellten Arbeitsabstand;
- Fig. 5: eine Draufsicht auf einen sternförmig ausgebildeten Optikhalter;
- Fig. 6a: eine Detailansicht einer Variante eines sternförmig ausgebildeten Optikhalters mit einem zentral in einem Strahl des Sterns angeordneten flexiblen Teilbereich;
- Fig. 6b: eine Detailansicht einer weiteren Variante eines sternförmig ausgebildeten Optikhalters mit einem versetzt in einem Strahl des Sterns angeordneten flexiblen Teilbereich;
- Fig. 7a: eine Darstellung ähnlich Figur 4 einer weiteren Ausführungsform einer Beleuchtungsvorrichtung, von der zur Vereinfachung nur eine Linse und ein an einem Fixpunkt festgelegter Optikhalter schematisch gezeigt ist, mit einer veränderten Position und Orientierung der Verbindung an dem Fixpunkt;
- Fig. 7b: eine Darstellung gemäß Figur 7a in einem verstellten Arbeitsabstand;
- Fig. 8a: eine Darstellung ähnlich Figur 4 einer weiteren Ausführungsform einer Beleuchtungsvorrichtung, von der zur Vereinfachung nur eine Linse und ein an einem Fixpunkt festgelegter Optikhalter schematisch gezeigt ist, mit einer veränderten Formgebung des Optikhalters;
- Fig. 8b: eine Darstellung gemäß Figur 8a in einem verstellten Arbeitsabstand;
- Fig. 9a: eine Darstellung ähnlich Figur 4 einer weiteren Ausführungsform einer Beleuchtungsvorrichtung, von der zur Vereinfachung nur eine Linse und ein an einem Fixpunkt festgelegter Optikhalter schematisch gezeigt ist, mit einer veränderten Angriffrichtung einer Einstelleinrichtung
- Fig. 9b: eine Darstellung gemäß Figur 9a in einem verstellten Arbeitsabstand;
- Fig. 10a: eine Darstellung einer Beleuchtungsvorrichtung, von der zur Vereinfachung nur Linsen und jeweils an einem Fixpunkt festgehaltene Optikhalter gezeigt sind;
- Fig. 10b: eine Darstellung gemäß Figur 10a in einem verstellten Arbeitsabstand;
- Fig. 11: eine Schnittdarstellung eines kamerabasierten Codelesers mit einer Beleuchtung nach dem Stand der Technik; und
- Fig. 12: einen positionsabhängigen Intensitätsverlauf der Beleuchtung des herkömmlichen Codelesers gemäß Figur 11 in zwei unterschiedlichen Einstellungen des Arbeitsabstandes.

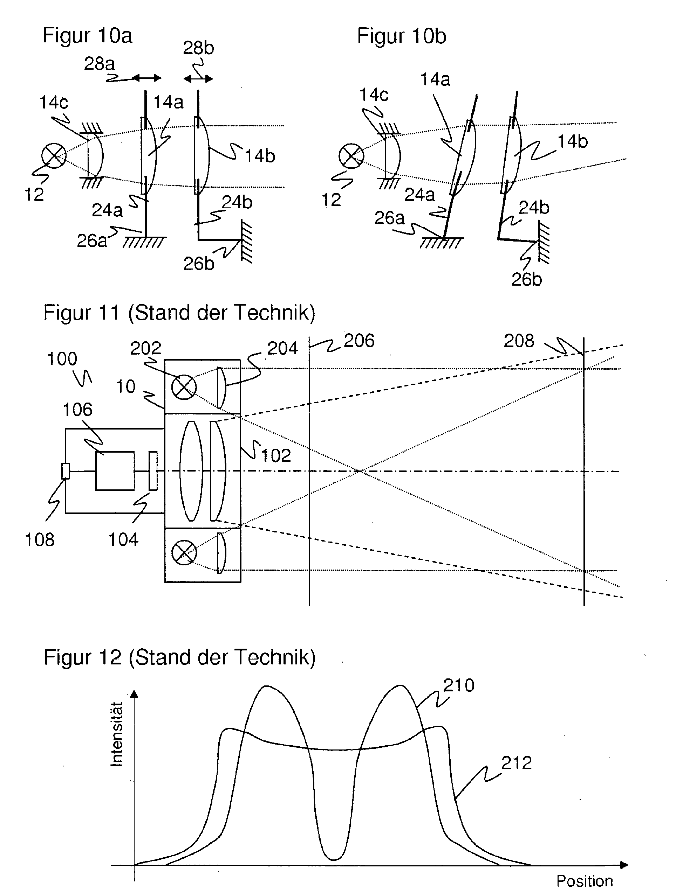

Figur 11 zeigt zunächst eine Schnittdarstellung eines kamerabasierten Codelesers 100 mit einer Beleuchtung nach dem Stand der Technik. Der Codeleser 100 weist rein beispielhaft eine durch zwei Linsen dargestellte Empfangsoptik 102 auf, um einen nicht dargestellten Code scharf auf einem Bildsensor 104 abzubilden. Bilddaten des Codes werden dann einer Auswertungseinheit 106 zugeleitet, welche daraus die Codeinformation extrahiert. Die Codeinformation, aber auch beispielsweise die Rohbilddaten, Parametrierungen oder Statusinformationen, können über eine Schnittstelle 108 ausgetauscht werden.

Der Codeleser 100 umfasst eine herkömmliche Beleuchtungsvorrichtung 200 mit einer Vielzahl von ringförmig um die Empfangsoptik 102 angeordneten Lichtsendern 202. Den Lichtsendern ist eine durch eine einzelne Linse dargestellte Sendeoptik 204 starr zugeordnet. Zur Illustration eingezeichnete Linien 206 und 208 schneiden den Strahlengang der Beleuchtungsvorrichtung 200 in einem nahen ersten Arbeitsabstand beziehungsweise einem fernen zweiten Arbeitsabstand.

Figur 12 zeigt positionsabhängige Intensitätsverläufe 210 und 212 der Beleuchtung in dem durch die Linien 206 und 208 bezeichneten ersten beziehungsweise zweiten Arbeitsabstand. Der Intensitätsverlauf 212 belegt eine sehr homogene Energieverteilung auf einem von dem Codeleser 100 im fernen zweiten Arbeitsabstand zu erfassenden Objekt. Dagegen zeigt der Intensitätsverlauf 210 eine mangels Anpassung weitgehend unbrauchbare Beleuchtung in dem nahen ersten Arbeitsabstand.

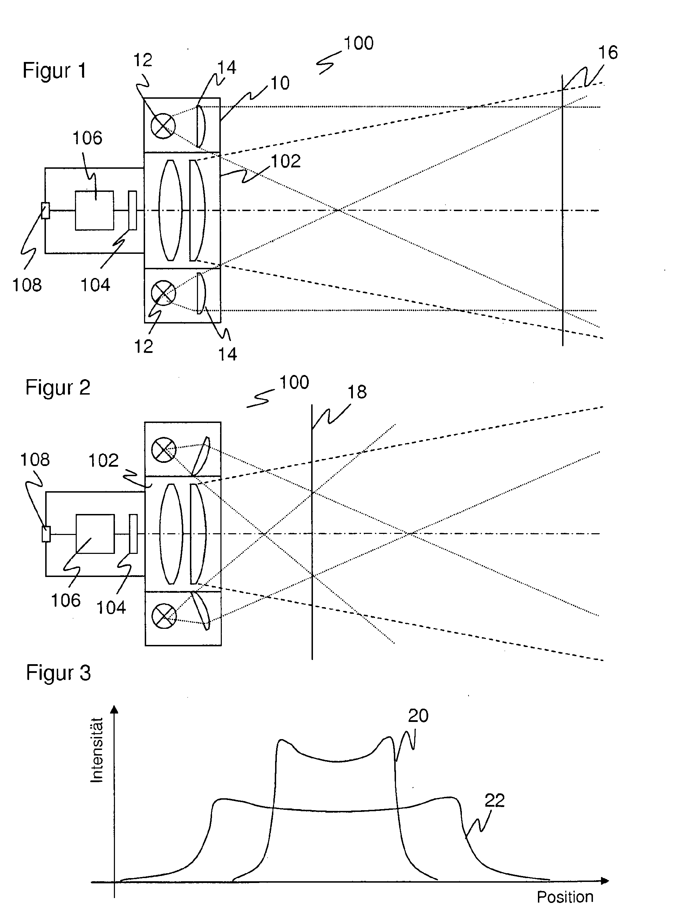

Die Figuren 1 bis 3 zeigen eine analoge Situation für einen kamerabasierten Codeleser 100 mit einer anpassbaren Beleuchtungsvorrichtung 10. Die Empfangsseite des Codelesers 100 mit Empfangsoptik 102, Bildsensor 104, Auswertungseinheit 106 und Schnittstelle 108 entspricht dem herkömmlichen Aufbau der Figur 11. Die Erfindung wird an dem Beispiel eines derartigen kamerabasierten Codelesers 100 beschrieben. Die Beleuchtungsvorrichtung 10 kann aber ebenso für andere Kameras mit eigener Beleuchtung eingesetzt werden. Auch ist die Beleuchtung nicht auf eine in Figur 1 gezeigte ringförmige Beleuchtung beschränkt.

In der Beleuchtungsvorrichtung 10 sind eine Vielzahl von beispielsweise zwei bis zehn oder noch mehr Lichtsendern 12 ringförmig angeordnet. Als Lichtquellen der Lichtsender 16 dienen beispielsweise LEDs. Den Lichtsendern 12 sind als Linsen dargestellte Optikelemente einer Beleuchtungs- oder Sendeoptik 14 zugeordnet. Anstelle von Linsen können auch andere refraktive, reflexive oder diffraktive optische Strahlformungselemente verwendet werden. Eine dargestellte Linse kann stets auch ein Objektiv aus mehreren optischen Elementen repräsentieren. Außerdem ist denkbar, dass den Lichtsendern 12 zusätzlich eine nicht dargestellte, ortsfeste Strahlformungsoptik zugeordnet ist.

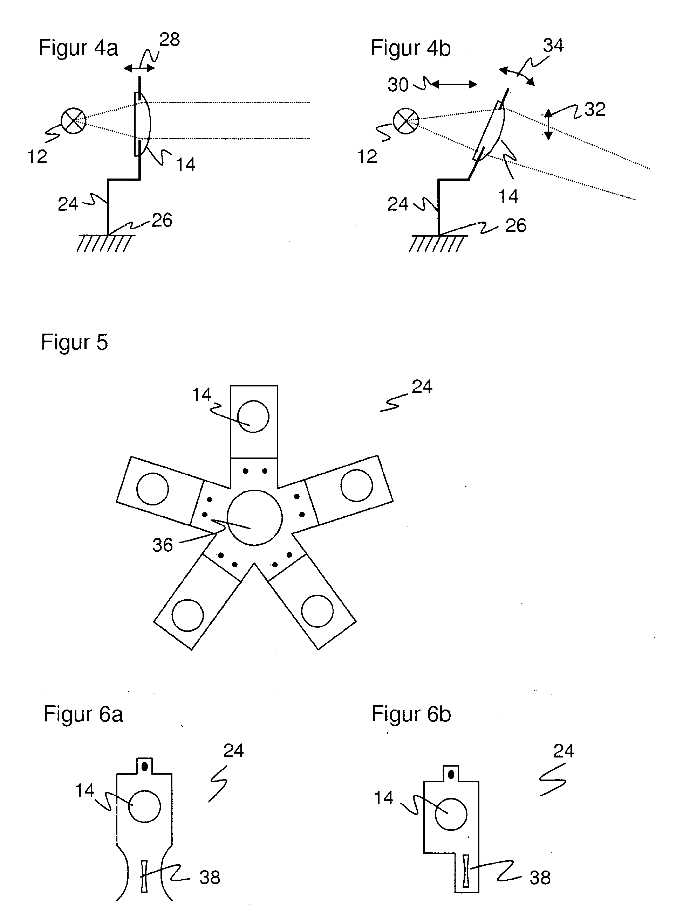

Figur 1 zeigt die Sendeoptik 14 und damit die Beleuchtungsvorrichtung 10 in einer ersten Einstellung auf einen fernen Arbeitsabstand, die durch eine Linie 16 illustriert ist. Figur 2 dagegen zeigt eine zweite Einstellung auf einen nahen, durch eine Linie 18 illustrierten Arbeitsabstand, wobei ein im Zusammenhang mit den Figuren 4 bis 10 noch näher erläuterte Optikhalter dafür sorgt, dass sich die von ihm gehalterte Sendeoptik 14 verstellt. Figur 2 deutet dies lediglich durch verkippte Linsen der Sendeoptik 14 an.

Figur 3 zeigt positionsabhängige Intensitätsverläufe 20 und 22 der Beleuchtung in den durch die Linien 16 und 18 bezeichneten Arbeitsabständen. Zwar verteilt sich die Energie in dem nahen Arbeitsabstand auf einen kleineren Bereich, so dass der Intensitätsverlauf 20 höher und schmaler bleibt. Beide Intensitätsverläufe 20 und 22 zeigen jedoch eine sehr gute Homogenität und bieten so, anders als im Vergleich dazu die Intensitätsverläufe 208, 210 gemäß Figur 12 der herkömmlichen fixen Beleuchtungsvorrichtung 200, geeignete Beleuchtungsbedingungen für eine zuverlässige Objekt- und Codeerfassung in dem gewählten Arbeitsabstand. Außerdem kann durch entsprechende Steuerung der Helligkeit der Sendeelemente bei Bedarf auch eine über den Abstand konstante Bestrahlungsstärke erreicht werden.

Figur 4 zeigt schematisch einen Lichtsender 12 und eine Linse als zugehörige Sendeoptik 14, wie sie Teil der Beleuchtungsvorrichtung 10 oder einer anderen, beispielsweise nicht als Ring ausgebildeten Beleuchtungsvorrichtung sein können. Die Sendeoptik 14 wird von einem nur schematisch im Schnitt dargestellten Optikhalter 24 gehaltert, der an einem Fixpunkt 26 festgelegt ist. Eine manuelle oder automatische Einstelleinrichtung 28, die in den Figuren jeweils nur durch einen Pfeil ihrer Wirkrichtung dargestellt ist, verstellt den Optikhalter 24. Da sich der Optikhalter 24 an dem Fixpunkt 26 nicht bewegt, wirken sich Stellbewegungen der Einstelleinrichtung 28 üblicherweise in elastischen Verformungen des Optikhalters 24 aus. Figur 4a zeigt eine Ausgangslage, bei der sich die Sendeoptik 14 gerade ausgerichtet und nahe bei dem Lichtsender 12 befindet. In Figur 4b dagegen hat die Einstelleinrichtung 28 den Lichtsender 12, wie durch einen Pfeil 30 angedeutet, längs der optischen Achse verschoben. Wegen der Festlegung in dem Fixpunkt 26 kann aber der Optikhalter 24 dieser Bewegung nicht einfach folgen, sondern lenkt die Sendeoptik 14 zwangsgeführt auch in einer durch einen Pfeil 32 angedeuteten Querrichtung zur optischen Achse aus. Es findet also eine Positionierung der Sendeoptik 14 in gleich zwei Freiheitsgraden statt. Zugleich bewirkt die Art der Aufhängung von Optikhalter 24 und Sendeoptik 12 in dem gezeigten Beispiel auch eine Verkippung der Sendeoptik 14. Durch eine nicht gezeigte alternative Ausgestaltung des Optikhalters 24, etwa in Gestalt einer Parallelführung, kann eine Verkippung auch vermieden werden.

Die Festlegung des Optikhalters 24 an dem Fixpunkt 26 bewirkt demnach trotz einer einfachen Einstellbewegung eine Verschiebung der Sendeoptik 14 in mehreren Freiheitsgraden, so dass durch Bewegung nur sehr kleiner Massen ein besonders großer Verstellbereich umgesetzt wird. Damit wird die Beleuchtung schnell und einfach an den Arbeitsabstand angepasst und leuchtet das zu erfassende Objekt in einer gewünschten Weise aus, beispielsweise homogen wie in Figur 3 gezeigt.

Figur 5 zeigt in einer Draufsicht den Optikhalter 24 in einer sternförmigen Ausführungsform. In den Strahlen des Sterns sind jeweils Linsen der Sendeoptik 14 angeordnet. Im Zentrum befindet sich eine Öffnung 36 für die Empfangsoptik 102. Dieser Optikhalter 24 kann vorzugsweise als Linsenblech ausgebildet sein, in den Linsen als Sendeoptik 14 direkt eingespritzt sind. Die Blechgeometrie ist jeweils durch die Randbedingungen der benötigten Beleuchtungsszenarien bestimmt und lässt alle notwendigen Gestaltungs- und Bewegungsfreiheitsgrade zu. Auch ein Optikhalter 24 als Kunststoff-Spritzgussteil ist möglich. Die Lager- und Biegestellen werden dabei beispielsweise durch Verjüngungen oder Verstärkungen so gestaltet, dass der Optikhalter 24 die erforderlichen Verstelleigenschaften unterstützt.

Diese sternförmige Ausführungsform ist ein Beispiel für eine Ringbeleuchtung, bei der Lichtsender 12 ringförmig und vorzugsweise gleichmäßig um die Empfangsoptik 102 verteilt sind, denen jeweils eine Sendeoptik 14 hier beispielhaft in Form von untereinander gleichartigen einfachen Linsen zugeordnet ist. Der sternförmige Optikhalter 24 wird an einem inneren Umfang, also bei der Öffnung 36, oder seinem äußeren Umfang, demnach den Enden der Strahlen, an einem Gehäuse oder einem anderen, im Bezug auf die Lichtsender 12 ortsfesten Element festgelegt. Die Einstelleinrichtung 28 greift dementsprechend an dem äußeren oder inneren Umfang an, wo der Optikhalter 24 nicht lage- beziehungsweise ortsfest ist. Bei Betätigung der Einstelleinrichtung 28 verbiegen sich dann die Strahlen und der innere Bereich bewegt sich dann relativ zu dem äußeren Bereich, wobei die Sendeoptiken 14 in der gewünschten Weise positioniert und verkippt werden.

Figur 6 zeigt eine Detailansicht eines Strahls des sternförmigen Optikhalters 24. Alternativ kann die Darstellung aber auch als eine eigene Beleuchtungsvorrichtung mit nur einer einzigen Lichtquelle 12 und Sendeoptik 14 oder als Teil eines anderen als eines sternförmigen Optikhalters 24 aufgefasst werden. In dem Strahl, beispielhaft in der Nähe des Strahlansatzes dargestellt, befindet sich ein flexibler Teilbereich 38. Bei Betätigung der Einstelleinrichtung 28 wird dann die Verformung hauptsächlich oder sogar so gut wie ausschließlich durch den flexiblen Teilbereich 38 bewirkt. In der Ausführungsform gemäß Figur 6a ist der flexible Teilbereich 38 zentral, in der Ausführungsform gemäß Figur 6b dagegen versetzt angeordnet. Analog kann die Verbiegung auch auf nicht nur eine, sondern mehrere bevorzugte Stellen verteilt werden.

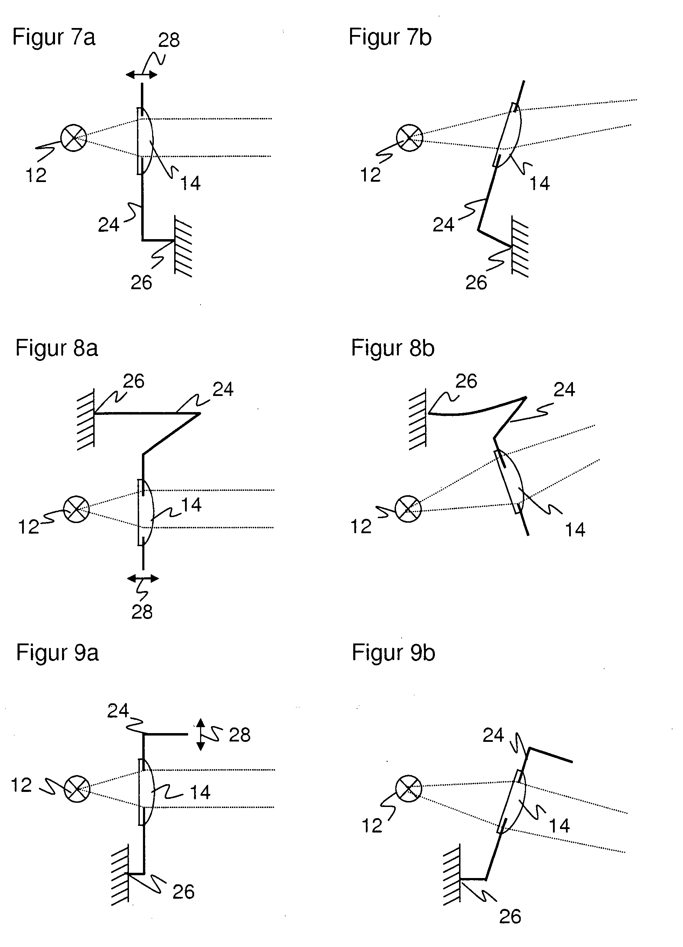

Die Figuren 7 bis 9 zeigen Alternativen zur Ausführungsform gemäß Figur 4 hinsichtlich Geometrie des Optikhalters 24, Lage des Fixpunktes 26 und Orientierung des Optikhalters an der Verbindungsstelle zu dem Fixpunkt 26 sowie Wirkrichtung der Einstelleinrichtung 28. In der Ausführungsform gemäß Figur 7 ist die Verbindung des Optikhalters 24 zu dem Fixpunkt 26 gegenüber der Figur 4 orthogonal, wodurch die Formgebung des Optikhalters 24 einfacher gewählt werden kann. In der Ausführungsform gemäß Figur 8 wurden dem Optikhalter 24 zusätzlich im Schnitt weitere Knickstellen gegeben, um die Verformbarkeit zu unterstützen und das Bewegungsverhalten bei Verformung zu verändern. Bei der Ausführungsform gemäß Figur 9 greift die Einstelleinrichtung 28 an einer von der Sendeoptik 14 betrachtet dem Fixpunkt 26 gegenüberliegenden Seite an dem Optikhalter 24 an und wirkt statt längs nun senkrecht zu der optischen Achse des Lichtsenders 12. Dies ist nur eine Auswahl von beispielhaften Gestaltungsmöglichkeiten, die insbesondere auch untereinander kombinierbar sind.

Figur 10 zeigt eine weitere Ausführungsform der Sendeoptik 14 und des Optikhalters 24. Dabei sind Sendeoptik 14 und Optikhalter 24a-b jeweils mehrteilig. Vor dem Lichtsender 12 befindet sich zunächst eine ortsfeste Linse 14c. Nachgeordnet folgen ein erster Optikhalter 24a und ein zweiter Optikhalter 24b mit jeweils einer zusätzlichen Linse 14a-b. Anstelle von Linsen 14a-c können auch andere refraktive, reflexive, diffraktive oder holografische optische Elemente eingesetzt werden. Die Linsen 14a-c bilden gemeinsam die Sendeoptik 14. Beide Optikhalter 24a-b sind durch jeweils eine Einstelleinrichtung 28a-b in ihrer Position veränderbar und jeweils in einem Fixpunkt 26a-b festgelegt. Jeder Optikhalter 24a-b mit seiner Linse 14a-b und Einstelleinrichtung 28a-b verhält sich also ganz entsprechend wie ein zu den Figuren 4, 7, 8 und 9 beispielhaft beschriebener einzelner Optikhalter 24, und es sind auch abweichend von der Darstellung der Figur 10 sämtliche Varianten und Kombinationen möglich, die Optikhalter 24a-b auszugestalten. Ebenso ist denkbar, dass mindestens einer der Optikhalter 24a-b nicht verstellbar ist, ohne Festlegung in einem Fixpunkt 26a-b nur längs der optischen Achse verstellbar ist, oder dass eine Einstelleinrichtung 26a-b zugleich auf mehrere Optikhalter 24a-b einwirkt. Die Optikhalter 24a-b können beispielsweise entsprechend den Figuren 5 und 6 sternförmig ausgebildet beziehungsweise mit flexiblen Teilbereichen 38 versehen sein.

Durch die Hintereinanderordnung mehrerer optischer Elemente entsteht eine noch größere Freiheit im Design der Sendeoptik 14 sowie deren abstandsabhängiger Anpassung. Dadurch können auch besonders anspruchsvolle Beleuchtungsszenarien bedient werden.

## Patentansprüche

1. Beleuchtungsvorrichtung (10) zur Erzeugung eines Beleuchtungsbereichs für einen kamerabasierten Codeleser (100), die mindestens einen Lichtsender (12), eine Sendeoptik (14), einen Optikhalter (24) für die Sendeoptik (14) und eine Einstelleinrichtung (28) aufweist, mittels derer der Optikhalter (24) bewegbar und dadurch der Beleuchtungsbereich auf einen Arbeitsabstand fokussierbar und/oder in seinen Abmessungen anpassbar ist, wobei der Optikhalter (24) an mindestens einem Fixpunkt (26) festgelegt ist, so dass sich der Optikhalter (24) bei Betätigung der Einstelleinrichtung (28) zwangsgeführt relativ zu dem Lichtsender (12) bewegt, an dem Fixpunkt (26) aber seine relative Lage gegenüber dem Lichtsender (12) beibehält und wobei die Einstelleinrichtung (28) dafür ausgebildet ist, den Optikhalter (24) längs der optischen Achse des Lichtsenders (12) zu bewegen,
**dadurch gekennzeichnet,**
**dass** die Sendeoptik (14) bei einer Bewegung längs der optischen Achse des Lichtsenders (12) durch das Festlegen an dem Fixpunkt (26) zugleich quer zu der optischen Achse beweglich und/oder verkippbar ist.

2. Beleuchtungsvorrichtung (10) nach Anspruch 1,
wobei die Sendeoptik (14) mit dem Optikhalter (24) einstückig ausgebildet ist, insbesondere indem Linsen in den Optikhalter (24) eingespritzt sind.

3. Beleuchtungsvorrichtung (10) nach Anspruch 1 oder 2,
wobei der Optikhalter (24) als Kunststoff-Spritzgussteil oder als Blech, insbesondere Linsenblech ausgebildet ist.

4. Beleuchtungsvorrichtung (10) nach einem der vorhergehenden Ansprüche, die eine Vielzahl von Lichtsendern (12) umfasst und wobei die Sendeoptik (14) eine Vielzahl den Lichtsendern (12) zugeordnete, insbesondere untereinander gleichartiger Linsen aufweist.

5. Beleuchtungsvorrichtung (10) nach Anspruch 4,
die als Ringbeleuchtung ausgebildet ist, bei der die Lichtsender (12) ringförmig über deren Umfang verteilt sind.

6. Beleuchtungsvorrichtung (10) nach Anspruch 5,
wobei der Optikhalter (24) an einem Außenumfangsbereich festgelegt und in einem Innenbereich durch die Einstelleinrichtung (28) beweglich ist oder umgekehrt.

7. Beleuchtungsvorrichtung (10) nach einem der Ansprüche 4 bis 6,
wobei der Optikhalter (24) sternförmig ausgebildet ist und jeweils in den Strahlen des Sterns mindestens ein Optikelement der Sendeoptik (14) aufweist.

8. Beleuchtungsvorrichtung (10) nach einem der vorhergehenden Ansprüche, wobei der Optikhalter (24) mindestens einen flexiblen Teilbereich (38) aufweist, der durch Betätigung der Einstelleinrichtung (28) elastisch verformbar ist.

9. Beleuchtungsvorrichtung (10) nach Anspruch 7 und 8,
wobei jeweils ein flexibler Teilbereich (38) zentral oder seitlich versetzt in den Strahlen des Sterns vorgesehen ist.

10. Beleuchtungsvorrichtung (10) nach einem der vorhergehenden Ansprüche, die mindestens zwei Optikhalter (24a-b) mit jeweils einer Sendeoptik (14a-b) aufweist.

11. Beleuchtungsvorrichtung (10) nach einem der vorhergehenden Ansprüche, wobei die Einstelleinrichtung (28) eine manuelle Betätigung oder einen elektronisch ansteuerbaren Aktor aufweist.

12. Kamerabasierter Codeleser (100) mit einer Beleuchtungsvorrichtung (10) nach einem der vorhergehenden Ansprüche, der einen Bildsensor (104) und eine Auswertungseinheit (106) aufweist, die dafür ausgebildet ist, aus Bilddaten des Bildsensors (104) eine Codeinformation eines aufgenommenen Codes auszulesen und auszugeben.

13. Beleuchtungsvorrichtung (10) nach Anspruch 12,
wobei die Einstelleinrichtung (28) eine Kopplung an eine Fokussiereinrichtung für eine Empfangsoptik (102) des Bildsensors (104) aufweist.

14. Verfahren zur Erzeugung eines Beleuchtungsbereichs für einen kamerabasierten Codeleser (100), bei dem ein Optikhalter (24) für eine Sendeoptik (14) eines Lichtsenders (12) bewegt und dadurch der Beleuchtungsbereich auf einen Arbeitsabstand fokussiert und/oder in seinen Abmessungen angepasst wird, wobei der an mindestens einem Fixpunkt (26) festgelegte Optikhalter (24) sich zwangsgeführt relativ zu dem Lichtsender (12) und längs der optischen Achse des Lichtsenders (12) bewegt und dabei an dem Fixpunkt (26) seine relative Lage gegenüber dem Lichtsender (12) beibehält,
**dadurch gekennzeichnet,**
**dass** die Sendeoptik (14) bei einer Bewegung längs der optischen Achse des Lichtsenders (12) durch das Festlegen an dem Fixpunkt (26) zugleich quer zu der optischen Achse bewegt und/oder verkippt wird.

## Claims

1. An illumination apparatus (10) for generating an illuminated region for a camera-based code reader (100) which comprises at least one light transmitter (12), transmission optics (14), an optics holder (24) for the transmission optics (14) and a setting device (28) by means of which the optics holder (24) can be moved and thus the illuminated region be focused at a working distance and/or be adapted in its dimensions, wherein the optics holder (24) is fixed at at least one point of fixation (26) so that the optics holder (24) is moved in a compulsory guided manner on actuation of the setting device (28) relative to the light transmitter (12) but maintains its relative position with respect to the light transmitter (12) at the point of fixation (26), and wherein the setting device (28) is configured to move the optics holder (24) along the optical axis of the light transmitter (12), **characterized in that**
the transmission optics (14) upon movement along the optical axis of the light transmitter (12) due to the fixation at the point of fixation (26) at the same time are movable transverse to the optical axis and/or can be tilted.

2. An illumination apparatus (10) in accordance with claim 1,
wherein the transmission optics (14) are made in one piece with the optics holder (24), in particular by injecting the lenses into the optics holder (24).

3. An illumination apparatus (10) in accordance with claim 1 or 2,
wherein the optics holder (24) is configured as an injection molded part or as sheet metal, in particular a lens sheet metal.

4. An illumination apparatus (10) in accordance with any of the preceding claims, further comprising a plurality of light transmitters (12) and wherein the transmission optics (14) comprise a plurality of lenses, in particular of similar type, associated with the light transmitter (12).

5. An illumination apparatus (10) in accordance with claim 4,
which is configured as a ring illumination in which the light transmitters (12) are distributed in a ring-like manner about its circumference.

6. An illumination apparatus (10) in accordance with claim 5,
wherein the optics holder (24) is fixed at its outer circumferential region and can be moved in an inner region by the setting device (28) or vice versa.

7. An illumination apparatus (10) in accordance with any of claims 4 to 6,
wherein the optics holder (24) is of star-like design and respectively has at least one optical element of the transmission optics (14) in the rays of a star.

8. An illumination apparatus (10) in accordance with any of the preceding claims, wherein the optics holder (24) comprises at least one flexible part region (38) which can be elastically deformed through an actuation of the setting device (28).

9. An illumination apparatus (10) in accordance with claim 7 and 8,
wherein a respective flexible part region (38) is arranged centrally or laterally offset in the rays of the star.

10. An illumination apparatus (10) in accordance with any of the preceding claims, which comprises at least two optics holders (24a-b) having respective transmission optics (14a-b).

11. An illumination apparatus (10) in accordance with any of the preceding claims, wherein the setting device (28) has a manual actuation or an electronically controllable actor.

12. A camera-based code reader (100) having an illumination apparatus (10) according to one of the preceding claims and comprising an image sensor (104) and an evaluation unit (106) which is configured to read out a code information of a code recorded in image data taken by the image sensor (104) and to output the code information.

13. An illumination apparatus (10) in accordance with claim 12,
wherein the setting device (28) has a coupling to a focusing device for reception optics (102) of the image sensor (104).

14. A method for generating an illuminated region for a camera-based code reader (100), wherein an optics holder (24) for transmission optics (14) of a light transmitter (12) is moved and thus the illuminated region is focused at a working distance and/or is adapted in its dimensions, wherein the optics holder (24) fixed at at least one point of fixation (26) is moved in a compulsory guided manner relative to the light transmitter (12) and thereby maintains its relative position with respect to the light transmitter (12) at the point of fixation (26),
**characterized in that** the transmission optics (14) upon movement along the optical axis of the light transmitter (12) due to the fixation at the point of fixation (26) at the same time are moved transverse to the optical axis and/or are tilted.

## Revendications

1. Dispositif d'éclairage (10) pour engendrer une zone éclairée pour un lecteur de code (100) basé sur une caméra, qui comprend au moins un émetteur de lumière (12), une optique d'émission (14), un porte-optique (24) pour l'optique d'émission (14) et un moyen de réglage (28) au moyen duquel le porte-optique (24) est déplaçable et ainsi la zone éclairée est susceptible d'être focalisée à une distance de travail et/ou d'être adaptée quant à ses dimensions, dans lequel le porte-optique (24) est immobilisé sur au moins un point fixe (26), de sorte que le porte-optique (24) se déplace, lors de l'actionnement du moyen de réglage (28), à force par rapport à l'émetteur de lumière (12), mais conserve au niveau du point fixe (26) sa position relative par rapport à l'émetteur de lumière (12), et le moyen de réglage (28) est réalisé pour déplacer le porte-optique (24) le long de l'axe optique de l'émetteur de lumière (12),
**caractérisé en ce que** l'optique d'émission (14), lors d'un déplacement le long de l'axe optique de l'émetteur de lumière (12), est simultanément capable de se déplacer et/ou de basculer transversalement à l'axe optique en raison de l'immobilisation au niveau du point fixe (26).

2. Dispositif d'éclairage (10) selon la revendication 1,
dans lequel l'optique d'émission (14) est réalisée d'une seule pièce avec le porte-optique (24), en particulier du fait que des lentilles sont intégrées par injection dans le porte-optique (24).

3. Dispositif d'éclairage (10) selon la revendication 1 ou 2,
dans lequel le porte-optique (24) est réalisé soit sous forme de pièce en matière plastique moulée par injection soit sous forme de tôle, en particulier de tôle à lentilles.

4. Dispositif d'éclairage (10) selon l'une des revendications précédentes, qui inclut une pluralité d'émetteurs de lumière (12) et dans lequel l'optique d'émission (14) comprend une pluralité de lentilles, en particulier de même type les unes par rapport aux autres, associées aux émetteurs de lumière (12).

5. Dispositif d'éclairage (10) selon la revendication 4,
qui est réalisé sous forme d'éclairage annulaire dans lequel les émetteurs de lumière (12) sont répartis en formant un anneau sur leur circonférence.

6. Dispositif d'éclairage (10) selon la revendication 5,
dans lequel le porte-optique (24) est immobilisé au niveau d'une zone périphérique extérieure et est mobile dans une zone intérieure avec l'aide du moyen de réglage (28), ou inversement.

7. Dispositif d'éclairage (10) selon l'une des revendications 4 à 6,
dans lequel le porte-optique (24) est réalisé en forme d'étoile et comprend respectivement dans les pointes de l'étoile au moins un élément optique de l'optique d'émission (14).

8. Dispositif d'éclairage (10) selon l'une des revendications précédentes,
dans lequel le porte-optique (24) comprend au moins une zone partielle flexible (38) qui est déformable élastiquement par actionnement du moyen de réglage (28).

9. Dispositif d'éclairage (10) selon la revendication 7 et 8,
dans lequel une zone partielle flexible respective (38) est prévue au centre ou en décalage latéral dans les pointes de l'étoile.

10. Dispositif d'éclairage (10) selon l'une des revendications précédentes, qui comprend au moins deux porte-optique (21a-b) avec chacun une optique d'émission (14a-b).

11. Dispositif d'éclairage (10) selon l'une des revendications précédentes,
dans lequel le moyen de réglage (28) comprend un actionnement manuel ou un actionneur à pilotage électronique.

12. Lecteur de code (100) basé sur une caméra avec un dispositif d'éclairage (10) selon l'une des revendications précédentes, qui comprend un capteur d'images (104) et une unité d'évaluation (106) qui est réalisée pour lire et pour fournir, à partir des données d'images du capteur d'images (104), une information de code d'un code enregistré.

13. Dispositif d'éclairage (10) selon la revendication 12,
dans lequel le moyen de réglage (28) comprend un couplage à un moyen de focalisation pour une optique de réception (102) du capteur d'images (104).

14. Procédé pour engendrer une zone d'éclairage pour un lecteur de code (100) basé sur une caméra, dans lequel on déplace un porte-optique (24) pour une optique d'émission (14) d'un émetteur de lumière (12) et ainsi la zone d'éclairage est focalisée à une distance de travail et/ou adaptée quant à ses dimensions, dans lequel le porte-optique (24) immobilisé sur au moins un point fixe (26) se déplace de manière forcée par rapport à l'émetteur de lumière (12) et le long de l'axe optique de l'émetteur de lumière (12) et conserve alors au niveau du point fixe (26) sa position relative par rapport à l'émetteur de lumière (12), **caractérisé en ce que**
l'optique d'émission (14), lors d'un déplacement le long de l'axe optique de l'émetteur de lumière (12), est simultanément déplacée et/ou basculée transversalement à l'axe optique en raison de l'immobilisation au niveau du point fixe (26).
